# EUROPEAN PATENT APPLICATION

(11) **EP 2 660 199 A1**
(43) Date of publication of application: **06.11.2013**
(21) Application number: 10861286.2
(22) Date of filing: 31.12.2010
(51) Int. Cl.: C01B 31/04

(54) **COMPOSITE MATERIAL OF CARBON-COATED GRAPHENE OXIDE, PREPARATION METHOD AND APPLICATION THEREOF**

(71) Applicant: Ocean's King Lighting Science&Technology Co., Ltd., Guangdong 518054 (CN)
(72) Inventor: ZHOU, Mingjie, Shenzhen Guangdong 518054 (CN); PAN, Jun, Shenzhen Guangdong 518054 (CN); WANG, Yaobing, Shenzhen Guangdong 518054 (CN)
(74) Representative: Potter Clarkson LLP
(86) International application number: PCT/CN2010/080572
(87) International publication number: WO 2012/088705

(57) **Abstract**

A composite material of carbon-coated graphene oxide, its preparation method and application are provided. The method for preparing the composite material comprises the following steps: obtaining graphene oxide; mixing the said graphene oxide and the source of organic carbon according to the mass ratio of 1-10:1 in water to form a mixed solution; making the mixed solution react hydrothermally under the condition of 100∼250 °C, cooling, solid-liquid separating, washing, and drying to attain the composite material. The advantages of the preparation method are simple process, low energy consumption, low cost, no pollution and suitable for industrial production. The advantages of composite material are stable structural performance, high electric conductivity. Lithium ion battery and/or capacitor have/has high power density while the composite material is used to prepare the anode material of lithium ion battery and/or capacitor.

## Description

### Technical Field

The present invention belongs to the technical field of inorganic chemical engineering, and in particular relates to a carbon-coated graphene oxide composite material and a method for preparing the same and use of the same.

### Background Art

Since Andre K. Geim of the University of Manchester, UK, prepared a graphene material in 2004, it has drawn broad attention due to its unique structure and optoelectronic properties. Monolayer graphite is considered an ideal material due to its large specific surface area, excellent electrical conductivity and thermal conductivity and low thermal expansion coefficient, e.g. 1, high strength, Young's molar amount (1,100 GPa), breaking strength (125 GPa); 2, high thermal conductivity (5,000 W/mK); 3, high electrical conductivity, carrier mobility (200,000 cm²/V*s); and 4, high specific surface area (theoretical value: 2,630 m²/g). Especially due to its high electrical conductivity, large specific surface area and two-dimensional nano-scale structure of single molecular layers, it can be widely used as an electrode material. In addition, Yang Quanhong, etc. prepared a graphene oxide material having a specific surface area of 200 to 800 m²/g and a specific electrochemical capacity of 50 to 200 F/g by heating a graphene oxide at a heating rate of 5 to 50 °C/min to 150 to 600 °C under a vacuum of 0.01 Pa to 10 kPa to conduct a high vacuum thermal treatment; and maintaining the temperature for 0.5 to 20 h, during which the volume of the graphite oxide expands rapidly. Generally, as the graphene oxide contains -C-OH, -C-O-C, and even -COOH groups, it exhibits strong polarity. Dried graphene oxide has poor stability in the air, and is prone to absorb moisture to form hydrated graphene oxide. As an electrode material, the graphene oxide has a good discharge capacity and a good wettability in respect of the electrolyte. However, the graphene oxide still has some disadvantages. For example, the electrical conductivity of the fluorinated graphene oxide is relatively low and the stability needs further improvement. These lead to disadvantages such as poor high-current performances of the battery.

### Summary of the Inventions

An object of an embodiment of the present invention is to overcome the above disadvantages of the prior art, and to provide a carbon-coated graphene oxide composite material and a method for preparing the same, which is characterized in simple process, low energy consumption, low cost, and being suitable for industrial production.

In addition, an object of the present invention is to provide use of the above carbon-coated graphene oxide composite material as a cathode material for a lithium ion battery and/or a capacitor.

In order to achieve the above objects, the technical solutions of the present invention are as follows.

It is provided a method for preparing a carbon-coated graphene oxide composite material which comprises the steps of:
providing a graphene oxide;
mixing the graphene oxide and an organic carbon source in a mass ratio of 1-10 : 1 in water to form a mixed solution; and
subjecting the mixed solution to a hydrothermal reaction at 100 to 250 °C, cooling, conducting a solid/liquid separation, washing and drying to give the carbon-coated graphene oxide composite material.

In addition, it is provided a carbon-coated graphene oxide composite material, which is prepared by the above method.

Furthermore, it is provided use of the carbon-coated graphene oxide composite material according to an embodiment of the present invention in a lithium ion battery and/or a capacitor.

In the above method for preparing the carbon-coated graphene oxide composite material, the graphene oxide and the organic carbon source are mixed with water and subjected to a hydrothermal reaction to give the product. The preparation process is simple with low energy consumption, low cost and no pollution, and is suitable for industrial production. In the coated graphene oxide composite material prepared by the method, by combining carbon with the graphene oxide, a stable structure of carbon-coated graphene oxide is formed, which imparts a high electrical conductivity and a large power density to the carbon-coated graphene oxide composite material. When it is used to prepare a cathode material for a lithium ion battery and/or a capacitor, the lithium ion battery and/or the capacitor has a large power density.

### Description of the Figures

Fig. 1 shows a schematic flow chart of the method for preparing the carbon-coated graphene oxide composite material of the present invention;
Fig. 2 shows an XRD pattern of the carbon-coated graphene oxide composite material prepared in Example 1 of the present invention; and
Fig. 3 shows the first charge/discharge curve of a supercapacitor comprising a cathode sheet produced from the carbon-coated graphene oxide composite material prepared in Example 1 of the present invention under a voltage of 0 to 2.0 V and a current of 1 A/g.

### Specific Embodiments of the Invention

In order to make the technical problem underlying the present invention, the technical solutions and the beneficial effects more apparent, the present invention will be described in further detail with reference to the embodiments. It should be understood that the specific embodiments described herein are only for illustrating the present invention but not intended to limit the present invention.

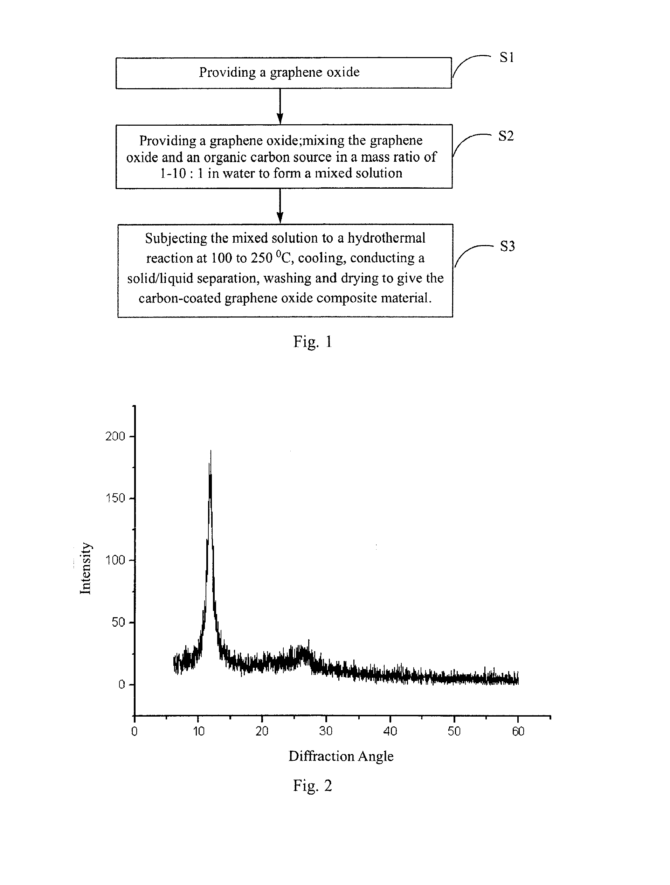

An embodiment of the present invention provides a method for preparing a carbon-coated graphene oxide composite material, which is characterized in simple process, low energy consumption, low cost, and being suitable for industrial production. Fig. 1 shows a flow chart of the method for preparing the carbon-coated graphene oxide composite material, which comprises the steps of:
S1: providing a graphene oxide;
S2: mixing the graphene oxide and an organic carbon source in a mass ratio of 1-10: 1 in water to form a mixed solution; and
S3: subjecting the mixed solution to a hydrothermal reaction at 100 to 250 °C, cooling, conducting a solid/liquid separation, washing and drying to give the carbon-coated graphene oxide composite material.

Specifically, for the process for providing the graphene oxide in step S1 of the above method for preparing the carbon-coated graphene oxide composite material, reference may be made to Example 1.

In step S2 of the above method for preparing the carbon-coated graphene oxide composite material, the mass ratio of the graphene oxide and the organic carbon source may be preferably 2-5 : 1. The amount of water added is such that the concentration of the graphene oxide in water is ensured to be preferably 0.1 to 10 g/ml. The organic carbon source may be preferably at least one of sucrose, glucose and polyethylene glycol. In order to reduce the chance of introducing impurities, the water is preferably deionized water. Of course, distilled water can also be used instead of deionized water.

In step S3 of the above method for preparing the carbon-coated graphene oxide composite material, the hydrothermal reaction may be conducted at a temperature of 100 to 250 °C, which can ensure the formation of the carbon-coated graphene oxide composite material. The temperature in the hydrothermal reaction is further preferably 120 to 200 °C. The preferred temperature range is more favorable to the combination of the graphene oxide and carbon, and to increase the yield of the carbon-coated graphene oxide composite material. On the premise that the hydrothermal reaction is carried out in the above temperature range, the duration of the hydrothermal reaction may be preferably 1 to 12 h, further preferably 5 to 10 h. The preferred duration can ensure that the hydrothermal reaction proceeds sufficiently, and avoid unnecessary energy consumption. The vessel for the hydrothermal reaction may be preferably a hydrothermal reactor, which may provide the above temperature for the hydrothermal reaction and at the same time provide a reasonable pressure, which facilitates the combination of the graphene oxide and carbon, i.e. facilitating the formation of the carbon-coated graphene oxide composite material.

In step S3, the cooling may be realized by any conventional way used in the art. In order to reduce the number of steps and reduce energy consumption, it is preferred to use natural cooling. The solid/liquid separation of the product formed in the hydrothermal reaction may be realized by any way for collecting the carbon-coated graphene oxide composite material, such as filtration, centrifugation, or the like.

The washing is to remove impurities such as ions and residue reactants such as the organic carbon source from the carbon-coated graphene oxide composite material so as to achieve the purpose of purifying the carbon-coated graphene oxide composite material. The washing of the carbon-coated graphene oxide composite material may be realized by any conventional way in the art. In order to reduce the production costs, washing with water and filtering are preferred.

The washed carbon-coated graphene oxide composite material is dried to further remove residual impurities and moisture from the carbon-coated graphene oxide composite material, so that the impurities and the moisture would evaporate during the heating process, so as to further purify the carbon-coated graphene oxide composite material. The drying is preferably realized by an ordinary blast drying, in which the temperature is preferably 80 to 120 °C, and the drying time is preferably 12 to 36 h, so that the moisture evaporates as much as possible, to achieve the purpose of drying.

In the above method for preparing the carbon-coated graphene oxide composite material, the graphene oxide and the organic carbon source are mixed and subjected to a hydrothermal reaction to give the product. The preparation process is simple with low energy consumption, low cost and no pollution, and is suitable for industrial production.

An embodiment of the present invention further provides a carbon-coated graphene oxide composite material. In the carbon-coated graphene oxide composite material, by combining carbon with the graphene oxide, a stable structure of a carbon-coated graphene oxide is formed, and the carbon-coated graphene oxide composite material is imparted with a high electrical conductivity and a large power density. In the carbon-coated graphene oxide composite material, the mass fraction of carbon which coats the graphene oxide may be 10 to 50 %.

As the above carbon-coated graphene oxide composite material has the excellent performances described above, an embodiment of the present invention further provides use of the above carbon-coated graphene oxide composite material in a lithium ion battery and/or a capacitor as a cathode material. When the carbon-coated graphene oxide composite material is used in the preparation of a cathode material for a lithium ion battery and/or a capacitor, the lithium ion battery and/or the capacitor may have a high power density.

In the following, different compositions, preparation methods and performances of the carbon-coated graphene oxide composite material will be illustrated with reference to the Examples.

### Example 1

The method for preparing the carbon-coated graphene oxide composite material comprises the following processes:
Graphite → graphene oxide → carbon-coated graphene oxide → performance test

S11: graphene oxide: A modified Hummers method is employed to prepare graphene oxide, which comprises the following specific steps. 20 g of graphite powder (50 mesh) having a purity of 99.5%, 10 g of potassium persulfate and 10 g of phosphorus pentoxide are added to concentrated sulfuric acid at 80 °C, stirred homogeneously, cooled for more than 6 h, filtered again, washed to neutral and dried. The dried sample is added to 230 ml of concentrated sulfuric acid at 0 °C, followed by adding 60 g of potassium permanganate while maintaining the temperature at below 20 °C. After keeping in an oil bath at 35 °C for 2 h, 920 ml of deionized water is slowly added. After 15 min, 2.8 L of deionized water (containing 50 ml of 30% hydrogen peroxide) is further added, after which the color of the mixture changes to bright yellow. The mixture is filtered while hot, washed with 5 L of 10% hydrochloric acid, filtered, and dried in vacuo at 60 °C for 48 h to obtain the graphene oxide.

S12: carbon-coated graphene oxide: To 20 g of the graphene oxide prepared in step S11 are added 200 ml of water and 5 g of sucrose. The mixture is stirred so that the graphene oxide and sucrose are mixed homogeneously to form a uniformly mixed solution in which the concentration of the graphene oxide is 0.1 g/ml.

S13: The mixed solution is transferred to a small-sized autoclave, and reacted at 180 °C for 10 h. After natural cooling, the precipitate is filtered, washed to clean and dried at 100 °C to obtain the carbon-coated graphene oxide material.

The carbon-coated graphene oxide material prepared in the present example is subjected to X-ray diffraction analysis and the XRD pattern of the carbon-coated graphene oxide material is obtained, which is shown in Fig. 2. As can be seen from Fig 2, a diffraction peak of graphene oxide is present at about 11 °C, and no diffraction peak of carbon is present, the reason of which may be that carbon is in an amorphous form or the content thereof is relatively small.

The carbon-coated graphene oxide material prepared in the present example is used in the preparation of a cathode sheet, and the preparation process comprises the following procedures.

Preparing the electrode sheet: To a mixture of 4.5 g of the carbon-coated graphene oxide material, 0.25 g of acetylene black and 0.25 g of PVDF is added dropwise NMP to make the mixture into a slurry, which is sufficiently stirred to mix uniformly, applied on a metal foil with a thickness of 200 µm, dried in vacuo at 100 °C for 12 h, and then taken out to give the electrode sheet.

Rolling the electrode sheet: The electrode sheet is pressed with a rolling machine to a thickness of 165 µm.

Cutting the electrode sheet: The pressed electrode sheet is punched with a punching machine to give a circular sheet having a diameter of 10 mm, which is accurately weighed.

Assembling the supercapacitor: In a glove box, the electrode sheet, a separator and an electrolyte are assembled into a supercapacitor following the battery production process, wherein the separator is celgard2000, and the electrolyte is a 0.5 mol/L solution of 1-ethyl-3-methyl-imidazole tetrafluoroborate. After the assembling is completed, the supercapacitor is left to stand for a day.

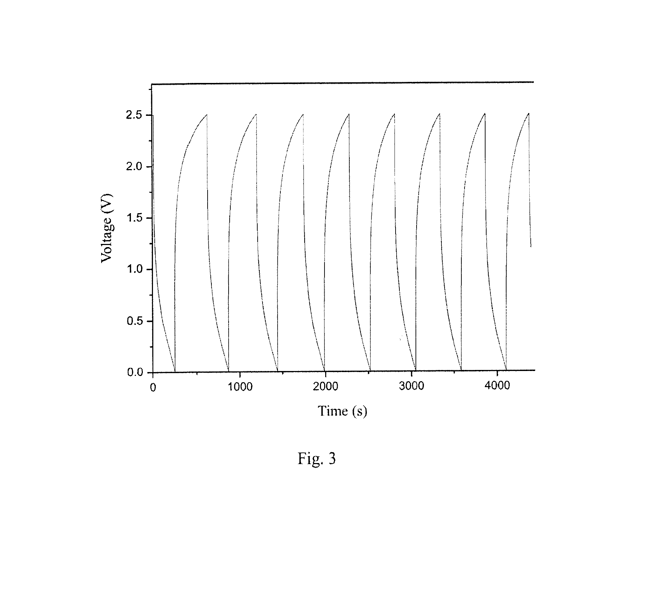

Performance test: The supercapacitor containing the cathode sheet manufactured from the carbon-coated graphene oxide material prepared in the present Example 1 is subjected to a constant current charge/discharge test under a voltage of 0 to 2.0 V and a current of 1 A/g. The test results of the charge/discharge specific capacity and the charge/discharge efficiency of the supercapacitor are shown in Table 1, and the first charge/discharge curve thereof under a voltage of 0 to 2.0 V and a current of 1 A/g is shown in Fig. 3. As shown in Table 1 and Fig. 3, the supercapacitor containing the cathode sheet manufactured from the carbon-coated graphene oxide material shows a high power density, a constant current, a charge specific capacity of 192.63 F/g, a discharge specific capacity of 181.69 F/g, and a charge/discharge efficiency of up to 94.32%, which indicates that the carbon-coated graphene oxide material prepared in the present example has a relatively good performance.

### Example 2

The method for preparing the carbon-coated graphene oxide composite material comprises the following processes.

S21: graphite oxide: See step S11 in Example 1.

S22: Preparation of carbon-coated graphene oxide: To 15 g of the graphene oxide prepared in step S21 are added 10 ml of water and 5 g of sucrose. The mixture is stirred so that the graphene oxide and sucrose are mixed homogeneously to form a uniformly mixed solution in which the concentration of the graphene oxide is 2.5 g/ml.

S23: The mixed solution is transferred to a small-sized autoclave, and reacted at 200 °C for 5 h. After natural cooling, the precipitate is filtered, washed to clean and dried at 100 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 3

The method for preparing the carbon-coated graphene oxide composite material comprises the following processes.

S31: graphite oxide: See step S11 in Example 1.

S32: Preparation of carbon-coated graphene oxide: To 10 g of the graphene oxide prepared in step S31 are added 50 ml of water and 5 g of sucrose. The mixture is stirred so that the graphene oxide and sucrose are mixed homogeneously to form a uniformly mixed solution in which the concentration of the graphene oxide is 0.2 g/ml.

S33: The mixed solution is transferred to a small-sized autoclave, and reacted at 120 °C for 10 h. After natural cooling, the precipitate is filtered, washed to clean and dried at 120 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 4

The method for preparing the carbon-coated graphene oxide composite material comprises the following processes.

S41: graphite oxide: See step S11 in Example 1.

S42: Preparation of carbon-coated graphene oxide: To 25 g of the graphene oxide prepared in step S41 are added 25 ml of water and 5 g of a mixture of sucrose and polyethylene glycol in a mass ratio of 1:1. The mixture is stirred so that the graphene oxide, sucrose and polyethylene glycol are mixed homogeneously to form a uniformly mixed solution in which the concentration of the graphene oxide is 1 g/ml.

S43: The mixed solution is transferred to a small-sized autoclave, and reacted at 140 °C for 8 h. After natural cooling, the precipitate is filtered, washed to clean and dried at 100 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 5

The method for preparing the carbon-coated graphene oxide composite material comprises the following processes.

S51: graphite oxide: See step S11 in Example 1.

S52: Preparation of carbon-coated graphene oxide: To 40 g of the graphene oxide prepared in step S51 are added 8 ml of water and 5 g of sucrose. The mixture is stirred so that the graphene oxide and sucrose are mixed homogeneously to form a uniformly mixed solution in which the concentration of the graphene oxide is 10 g/ml.

S53: The mixed solution is transferred to a small-sized autoclave, and reacted at 200 °C for 5 h. After natural cooling, the precipitate is filtered, washed to clean and dried at 90 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 6

The method for preparing the carbon-coated graphene oxide composite material comprises the following processes.

S61: graphite oxide: See step S11 in Example 1.

S62: Preparation of carbon-coated graphene oxide: To 50 g of the graphene oxide prepared in step S61 are added 5 ml of water and 5 g of polyethylene glycol. The mixture is stirred so that the graphene oxide and polyethylene glycol are mixed homogeneously to form a uniformly mixed solution in which the concentration of the graphene oxide is 10 g/ml.

S63: The mixed solution is transferred to a small-sized autoclave, and reacted at 100 °C for 3 h. After natural cooling, the precipitate is filtered, washed to clean and dried at 100 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 7

The method for preparing the carbon-coated graphene oxide composite material comprises the following processes.

S71: graphite oxide: See step S11 in Example 1.

S72: Preparation of carbon-coated graphene oxide: To 10 g of the graphene oxide prepared in step S71 are added 2 ml of water and 10 g of sucrose. The mixture is stirred so that the graphene oxide and sucrose are mixed homogeneously to form a uniformly mixed solution in which the concentration of the graphene oxide is 1 g/ml.

S73: The mixed solution is transferred to a small-sized autoclave, and reacted at 250 °C for 1 h. After natural cooling, the precipitate is filtered, washed to clean and dried at 120 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

### Example 8

The method for preparing the carbon-coated graphene oxide composite material comprises the following processes.

S81: graphite oxide: See step S11 in Example 1.

S82: Preparation of carbon-coated graphene oxide: To 45 g of the graphene oxide prepared in step S81 are added 10 ml of water and 5 g of sucrose. The mixture is stirred so that the graphene oxide and sucrose are mixed homogeneously to form a uniformly mixed solution in which the concentration of the graphene oxide is 4.5 g/ml.

S83: The mixed solution is transferred to a small-sized autoclave, and reacted at 100 °C for 6 h. After natural cooling, the precipitate is filtered, washed to clean and dried at 110 °C to obtain the carbon-coated graphene oxide material.

The carbon-coated graphene oxide material prepared in the present example is used in the preparation of a cathode sheet. The preparation process for the cathode sheet comprises preparing, rolling and cutting of the electrode sheet. For the specific preparation steps and the assembling of a supercapacitor containing the cathode sheet, see Example 1. The supercapacitor is subjected to a constant current charge/discharge test under a voltage of 0 to 2.0 V and a current of 1 A/g. The test results of the charge/discharge specific capacity and the charge/discharge efficiency of the supercapacitor are shown in Table 1.

**Table 1. Charge/discharge specific capacity and Charge/discharge efficiency of the supercapacitor**

| Test Items | Ex. 1 | Ex. 2 | Ex. 3 | Ex. 4 | Ex. 5 | Ex. 6 | Ex. 7 | Ex. 8 |
|---|---|---|---|---|---|---|---|---|
| Charge specific capacity (F/g) | 192.63 | 188.61 | 185.23 | 175.13 | 173.88 | 166.95 | 163.82 | 172.56 |
| Discharge specific capacity (F/g) | 181.69 | 182.54 | 179.68 | 170.21 | 169.43 | 159.42 | 158.85 | 166.96 |
| Charge/ discharge efficiency | 94.32% | 96.78% | 97.00% | 97.19% | 97.44% | 95.49% | 96.97% | 96.75% |

Described above are only preferred embodiments of the present invention, which are not intended to limit the present invention. Any modification, equivalent substitution and improvement made within the spirit and principle of the present invention shall be included in the scope of sought protection in the present invention.

## Claims

1. A method for preparing a carbon-coated graphene oxide composite material, comprising the steps of:
providing a graphene oxide;
mixing the graphene oxide and an organic carbon source in a mass ratio of 1-10: 1 in water to form a mixed solution; and
subjecting the mixed solution to a hydrothermal reaction at 100 to 250 °C, cooling,
conducting a solid/liquid separation, washing and drying to give the carbon-coated graphene oxide composite material.

2. The method for preparing a carbon-coated graphene oxide composite material according to claim 1, **characterized in that** the mass ratio of the graphene oxide and the organic carbon source is 2-5 : 1.

3. The method for preparing a carbon-coated graphene oxide composite material according to claim 1, **characterized in that**, in the mixed solution, the concentration of the graphene oxide in water is 0.1 to 10 g/ml.

4. The method for preparing a carbon-coated graphene oxide composite material according to claim 1, **characterized in that** the organic carbon source is at least one of sucrose, glucose and polyethylene glycol.

5. The method for preparing a carbon-coated graphene oxide composite material according to claim 1, **characterized in that** the water is deionized water.

6. The method for preparing a carbon-coated graphene oxide composite material according to claim 1, **characterized in that** the hydrothermal reaction is conducted at a temperature of 120 to 200 °C for 5 to 10 h.

7. A carbon-coated graphene oxide composite material, which is prepared by the method for preparing a carbon-coated graphene oxide composite material according to any one of Claims 1 to 6.

8. The carbon-coated graphene oxide composite material according to claim 7, **characterized in that** the mass fraction of carbon which coats the graphene oxide is 10 to 50 %.

9. Use of the carbon-coated graphene oxide composite material according to Claim 7 in a lithium ion battery and/or a capacitor.

10. The capacitor according to claim 9, **characterized in that** the capacitor has a charge specific capacity of 163.82 to 192.63 F/g and a discharge specific capacity of 158.85 to 182.54 F/g.
